# EUROPÄISCHE PATENTSCHRIFT

(11) **EP 2 247 435 B1**
(45) Veröffentlichungstag und Bekanntmachung des Hinweises auf die Patenterteilung: **28.09.2011**
(21) Anmeldenummer: 09718624.1
(22) Anmeldetag: 26.02.2009
(51) Int. Cl.: B29C 70/56

(54) **VERFAHREN UND VORRICHTUNG SOWIE DEREN VERWENDUNG ZUR HERSTELLUNG EINES FASERVERBUNDTEILS**
METHOD AND DEVICE AND THE USE THEREOF FOR PRODUCING A FIBER COMPOSITE PART
PROCÉDÉ ET DISPOSITIF ET UTILISATION DE CEUX-CI POUR LA FABRICATION D'UN ÉLÉMENT COMPOSITE RENFORCÉ PAR FIBRES

(30) Priorität: 02.03.2008 DE 102008011517
(43) Veröffentlichungstag der Anmeldung: 10.11.2010
(73) Patentinhaber: Schottdorf, Bernd, 89561 Dischingen (DE)
(72) Erfinder: Schottdorf, Bernd, 89561 Dischingen (DE)
(74) Vertreter: Samson & Partner
(86) Internationale Anmeldenummer: PCT/EP2009/001386
(87) Internationale Veröffentlichungsnummer: WO 2009/112162

(56) Entgegenhaltungen:
- EP-A- 0 488 870
- WO-A-93/09932
- FR-A- 1 510 566
- GB-A- 1 602 204
- US-A- 5 921 048
- US-A1- 2004 247 866

## Beschreibung

Die Erfindung betrifft ein Verfahren und eine Vorrichtung zur Herstellung eines Faserverbundteils.

Ein Faserverbundteil weist Fasern auf, die über eine Matrix zu einem Verbund gekoppelt werden. Die Matrix dient im Wesentlichen einem Fixieren der Fasern in deren Ausrichtung im Formteil, einem Einleiten von Kräften in die Fasern, einem Stützen der Fasern bei Druckbeanspruchung und dem Schutz des Faserverbundteils vor äußeren Einwirkungen.

Geeignete Fasern sind z.B. Kohlefasern, Glasfasern, Aramid, Metallfasern oder ähnliches und/oder auch Kombinationen aus solchen Fasern.

Verfahren, Vorrichtung und Stützstrukturen - auch Wickelkerne oder Urformen genannt - zum Herstellen von Faserverbundteilen sind aus dem "Handbuch Verbundwerkstoffe", Neitzel, Hanser Verlag 2004 bekannt. Das bekannte Verfahren - auch Wickelverfahren genannt - dient der Herstellung von Faserverbund-Formteilen, wie Behältern, Rohren, Achsen und Wellen. Die Geometrie bzw. der Querschnitt dieser Formteile wird von einem Wickelkern festgelegt, auf den mit Harz imprägnierte Fasern abgelegt werden. Bei zylinder- und kegelförmigen Formteilen mit einseitigem Boden kann der Wickelkern nach dem Herstellungsprozess aus dem Formteil herausgezogen und später wiederverwendet werden. Bei anderen Formteilen verbleiben die Wickelkerne im Formteil. Sie werden verlorene Kerne genannt und können z.B. die Diffusionsfestigkeit eines Formteils verbessern. Es sind auch ausschmelzbare Kerne bekannt.

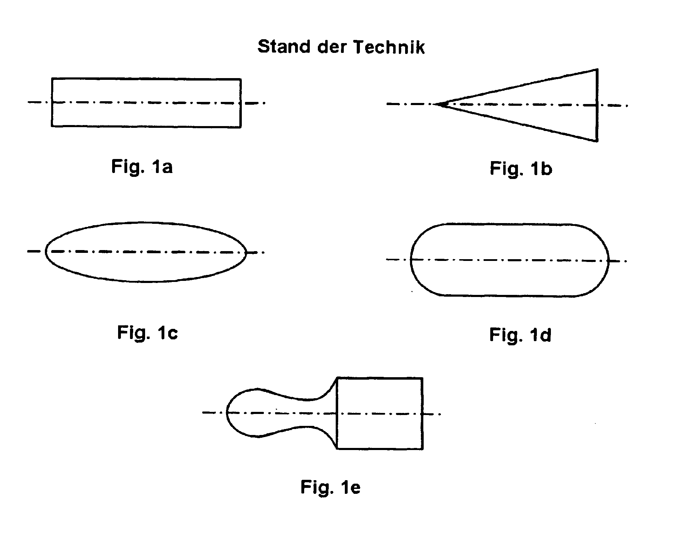

Aus Neitzel bekannte Wickelkerne sind in Fig. 1a bis 1e dargestellt.

Zu den bekannten Herstellungsverfahren gehören auch das Umfangswickeln und Kreuzwickeln, bei dem ein Fadenableger ein oder mehrere Endlosfasern, Faserbündel (Rovings), Filamente oder Fasergewebestreifen in vorbestimmtem Winkel auf einen rotierenden bekannten Wickelkern ablegt. Die Vorschubgeschwindigkeit des Fadenablegers in Längsrichtung und seine Umfangsgeschwindigkeit um den Wickelkern bestimmen dabei den Abstand zwischen den abgelegten Fasern und die Steigung der spiralförmig aufgebrachten Fasern.

Die zur Einbettung der Fasern vorgesehene Matrix besteht z.B. aus geeigneten Kunstharzmischungen. Geeignete Matrixsysteme sind beim Wickeln formbar, geben nach dem Aushärten dem Faserverbundteil seine Form und stellen die Kraftübertragung zwischen den Fasern und Faserschichten sicher.

Bei einem bekannten Duroplastsystem werden mit Reaktionsharz imprägnierte Rovings eingesetzt. Hierzu werden die Rovings von einer Spule abgezogen, dann durch ein Reaktionsharzbad geführt und danach auf den Wickelkern aufgebracht. Alternativ können auch Duroplast-Prepregs, d.h. bereits vorimprägnierte Fasern, auf den Wickelkern aufgebracht werden. Das Aushärten des Harzes zur Matrix erfolgt je nach verwendetem Harz unter Umgebungsbedingungen (bei Raumtemperatur) oder in einem Ofen, z.B. Autoklaven, bei erhöhter Temperatur ggf. bei Unter- oder Überdruck. Daneben gibt es noch weitere bekannte Verfahren zum Aushärten, z.B. mittels UV- oder Elektronen-Strahlung.

Bei thermoplastischen Matrixsystemen werden vorimprägnierte Rovings oder Prepregs vor der Verarbeitung erwärmt. Die Rovings (auch Tapes genannt) werden dabei mit der Matrix (das Harz) auf den (Wickel-)Kern, d.h. die Urform selbst, aufgebracht und dort miteinander verschmolzen; ggf. auch mit der Matrix einer bereits auf der Urform abgelegten Lage verschmolzen.

Bekannte Wickelverfahren sind aus anlagentechnischen Gründen auf Kernlängen von ca. 6 m begrenzt (Neitzel, Kap. 18.4). Bei größeren Ausmaßen wird der Kern schwer und ist besonders aus langen schlanken Formteilen schwer entfernbar. Darüber hinaus ist der Herstellungsaufwand der (als Stützstruktur während der Formgebung dienenden) Wickelkerne beträchtlich.

Die US 2004/0247866 A1 beschreibt ein Verfahren und eine Vorrichtung zur Herstellung von Trägern aus Faserverbundwerkstoff gemäß dem Oberbegriff der Ansprüche 1 und 7. Die Träger werden mittels gespannter Axialfasern, die ein Stützskelett bilden, und darüber in diversen Richtungen gewickelten Fasern gebildet. Zur Herstellung konischer oder anderweitig im Durchmesser veränderlicher Träger wird eine externe Stützeinrichtung eingesetzt, um die gewickelten Fasern punktartig zu stützen.

Die WO 93/09932 A1 beschreibt ein Verfahren zur Herstellung eines langgestreckten Werkstücks aus faserverstärktem Material, insbesondere wird ein Gewebeschlauch aus einer axial um Haken gewickelten Faser gespannt ausgebildet und gehärtet. Der Gewebeschlauch dient nach dem Härten als Wickeldorn für weitere Faserschichten.

Ziel der Erfindung ist es, eine alternative, auch als Wickelkern verwendbare Stützstruktur, und darauf aufbauend ein alternatives Verfahren, eine alternative Vorrichtung zur Herstellung eines Faserverbundteils bereitzustellen.

Erfindungsgemäß wird diese Aufgabe jeweils durch die Gegenstände der Ansprüche 1 und 7 gelöst.

Die Erfindung geht demnach von einer Stützstruktur aus gespannten Fasern aus, welche den bekannten Wickelkern/die bekannte Urform gewissermaßen ersetzt. Hierzu werden die gespannten Fasern, z.B. zwischen zwei Spannvorrichtungen, in der jeweils gewünschten Geometrie angeordnet und dann mit einer bestimmten Zugkraft so aufgespannt, dass die Umhüllende der aus sämtlichen gespannten Fasern gebildeten Struktur der Urform des herzustellenden Faserverbund-Formteils entspricht. Es können auch mehr als zwei Spannvorrichtungen, Spannstellen oder auch Umlenkstellen zur Ausbildung der erfindungsgemäßen Stützstruktur eingesetzt werden. Die Spannvorrichtungen, Spannstellen und/oder Umlenkstellen können feststehen oder in einer, zwei oder allen drei Raumrichtungen verstellbar sein.

Da die Stützstruktur die spätere Gestalt - ebenso wie die sonst erforderlichen bekannten Kernstrukturen (Wickelkern/Urform) - des Faserverbundteils maßgeblich bestimmt, können auch auf sie weitere Fasern, Faserbündel, Roving, Tape oder Prepregs in grundsätzlich bekannter Weise aufgebracht und mit ihnen verbunden werden, z.B. durch Laminieren, Weben, Wirken, Flechten etc. Die Stützstruktur selbst wird dabei Bestandteil des Faserverbundteils.

Geometrische oder konstruktive Beschränkungen, wie sie bei der Verwendung von verlorenen oder entfernbaren Kernen auftreten, fallen weitgehend weg. Das Verfahren erlaubt über die Gestaltung der Stützstrukurgeometrie nahezu beliebige hohle, offene, geschlossene aber auch massive Querschnittgeometrien ohne Längenbeschränkungen. Insbesondere ist die Geometrie der Stützstruktur nicht auf sogenannte mathematische Regelflächen beschränkt. Durch die besonderen physikalischen Eigenschaften von Fasern mit besonders hoher Zugstabilität (hochfeste Fasern) resultiert eine sehr geringe Abweichung der tatsächlichen Fasererstreckung aus ihrer gewünschten Spannrichtung, also beispielsweise ein sogenanntes Durchhängen des gespannten Faserstranges (etwa in Richtung der räumlichen X- und/oder Y-Achse) und daher eine hohe Formpräzision bei Längskörpern. Die sonst bei Wickelkörpern bestehenden Längenlimitationen können hierdurch prinzipiell aufgehoben werden.

Bevorzugt enthalten oder umfassen die gespannten Fasern der Stützstruktur Kohlefasern. Kohlefasern haben eine geringe Dehnbarkeit und sind unter entsprechender Spannung relativ starr. Daraus resultiert eine hohe Präzision bei der Formgestaltung, insbesondere für Längsstrukturen. Aus hochfesten Fasern, also etwa Kohlefasern hergestellte Stützstrukturen eignen sich deshalb gut als Kern oder Urform.

Bevorzugt enthalten die weiteren (mit der Stützstruktur verbundenen) Fasern Kohlefasern. Kohlefasern sind besonders leicht und fest und zur Herstellung von Bauteilen mit definierbaren Eigenschaften gut geeignet. Insbesondere sind sie auch leicht mit einer Kohlefasern aufweisenden Stützstruktur verbindbar.

Weiter bevorzugt werden Faser-Rovings und/oder Prepegs mit einer Ablegeeinrichtung auf der Stützstruktur aus gespannten Fasern abgelegt. Eine dazu geeignete Vorrichtung, z.B. eine Ablegeeinrichtung, ein Roboter oder ähnliches, legt Fasern, Fäden, Rovings und/oder Prepregs auf bzw. verwebt, verknüpft oder verbindet diese mit bzw, spannt diese auf die gespannten Fasern der Stützstruktur. Ablegen bezeichnet hier übliche geeignete Verfahren, unterschiedliche Fasern, Faserbündel oder Faserschichten auf die Stützstruktur aufzubringen, dazu gehören insbesondere an sich bekannte Verfahren wie Lamminieren, Wickeln, Weben, Flechten etc.

Die Ablegevorrichtung ist bevorzugt verstellbar, um Rovings und/oder Prepregs auf den gespannten Fasern bequem ablegen zu können. Alternativ oder zusätzlich kann auch die Spannrichtung einzelner oder aller gespannter Fasern verstellbar oder sogar während des Herstellungsverfahrens änderbar sein. Damit sind auch gekrümmte bzw. sich in Längsrichtung erweiternde bzw. verjüngende Faserverbundteile herstellbar, indem die weiteren Fasern abschnittsweise auf die sich während des Herstellungsprozesses ändernde Stützstruktur aufgebracht werden. Diese Maßnahmen stellen auch auf das schrittweise Aushärten ab und auf die Möglichkeit Strukturen und physikalische Eigenschaften an sich verändernde Vorgänge anzupassen. Parallel zu den während des Herstellungsprozesses aufgebrachten weiteren Fasern können auch Bauteile jeglicher Form (z.B. Gelenke) abschnittsweise aufgebracht werden und die mechanischen Eigenschaften der Verbindung zwischen eingesetzten Elementen und Fasern durch entsprechend gewählten Faserverlauf optimiert werden.

Vorteilhafterweise können bereits während des Herstellungsprozesses des Faserverbundteiles in dieses mechanische Teile, insbesondere spezielle Formteile wie Gelenke (Prothesen) oder Strukturteile, wie z. B. Salinge, Schienen, etc. eingebracht werden, was die Herstellung solcher mehren Teile enthaltender Faserverbundteile erheblich erleichtert.

Die Vorrichtung gemäß Anspruch 7 weist eine Spanneinrichtung auf, welche die Stützstruktur aufnimmt und ihre Form zumindest mitbestimmt.

Je nach Ausführung der Spanneinrichtung können die gespannten Fasern der Stützstruktur einen dreidimensionalen oder einen zweidimensionalen, d.h. flächigen Kern beschreiben. Insbesondere können die gespannten Fasern auch Erzeugende einer Regelfläche sein, etwa einer Ebene, eines Zylinders, eines Kegels, eines hyperbolischen Paraboloids oder Ähnliches.

Bevorzugt umfasst die Vorrichtung wenigstens einen an der Spanneinrichtung angeordneten, die gespannten Fasern aufnehmenden ersten Kopf. Dieser dient vorzugsweise zum Spannen und/oder Befestigen der die Stützstruktur bildenden Fasern.

Vorzugsweise ist der erste Kopf um eine Spannachse an der Spanneinrichtung verdrehbar gelagert und bevorzugt mit einem ersten Drehantrieb zum Drehen des ersten Kopfs koppelbar.

Solche Köpfe können sich z.B. durch ihre Größe, ihr Profil, ihre Mittel zur Befestigungen für zu spannende Fasern oder Faserbündel und deren Anordnung etc. unterscheiden. Über den Drehantrieb kann der Kopf mit den Fasern gedreht werden, z.B. um das Ablegen der weiteren Fasern zu erleichtern oder das Profil der Stützstruktur zu verändern.

Eine vorzugsweise vorgesehene zweite Spanneinrichtung mit drehbarem Kopf erleichtert das Handling der Stützstruktur insgesamt.

Bevorzugt ist wenigstens ein Drehantrieb, vorzugsweise aber sind beide Drehantriebe derart ausgelegt, insbesondere ansteuerbar, dass sich die beiden Drehköpfe synchron drehen. Damit ist auch eine lange Stützstruktur als weitgehend formstabile Einheit beim Belegen exakt handhabbar. Die Drehmotoren können jedoch auch die Drehköpfe zunächst mit einem bestimmten Schlupf und dann einem konstanten Winkelversatz zueinander drehen.

Die Ausbildung der Vorrichtung gemäß Anspruch 12 erlaubt die Herstellung gekrümmter Faserverbundteile.

Bevorzugt umfasst die Vorrichtung eine Ablegeeinrichtung, die in Längsrichtung (Z-Richtung) der gespannten Fasern bewegbar ist. Damit ist eine mechanisierte Faserverbundteil-Herstellung möglich, insbesondere dann, wenn Ablegeeinrichtung, Drehantriebe und die Bewegungen in X- und/oder Y-Richtung der Spanneinrichtung aufeinander abgestimmt, z.B. von einer zentralen Steuervorrichtung gesteuert, werden.

Die Ablegeeinrichtung ist weiter vorzugsweise in wenigstens einer Richtung senkrecht zur Längsrichtung der gespannten Fasern verstellbar angeordnet. Damit kann sie ggf. den Verstellbewegungen der Stützstruktur folgen. Zusätzlich kann die Ablegeeinrichtung wenigstens um eine Rotationsachse drehbar sein, insbesondere um lokale Verbindungsstellen oder ähnliches an der Stützstruktur zu bilden, wie z.B. Aussparungen umweben, Halterungen laminieren etc.

Anspruch 15 stellt auf die Verwendung der vorstehend beschriebenen Erfindung zur Herstellung diverser Formteile ab, einschließlich der Herstellung von Lagen, die teilweise offen bleiben, z. B. Netzstrukturen, Fensteröffnungen oder Aussparungen sowie Ansatzstutzen.

Unter Fasern im Sinne der Erfindung sind allgemein in Längsrichtung auf Zug belastbare Längsstrukturen, insbesondere hochfeste Längsstrukturen zu verstehen, wie Fasern im engeren Sinne, Stränge, Fiber, Fäden, Schnüre, Kabel, Drähte oder dergleichen.

Nachstehend werden Ausführungsbeispiele der Erfindung anhand schematischer Zeichnungen näher erläutert. Dabei zeigen:
- Fig. 1a 1e: eine Ansicht bekannter Wickelkerne;
- Fig. 2: eine Seitenansicht einer ersten erfindungsgemäßen Vorrichtung zur Herstellung von Faserverbundteilen;
- Fig. 3: eine perspektivische Ansicht eines die gespannten Fasern aufnehmenden Drehkopfs für eine erfindungsgemäße Vorrichtung;
- Fig. 4: ein schematisches Flussdiagramm, das unterschiedliche Abläufe der Herstellung eines Faserverbundteils zeigt;
- Fig. 5: eine perspektivische Ansicht einer zweiten erfindungsgemäßen Vorrichtung zur Herstellung von Faserverbundteilen;
- Fig. 6: eine Seitenansicht einer dritten erfindungsgemäßen Vorrichtung zur Herstellung von Faserverbundteilen;
- Fig. 7: ein Aufsicht auf eine vierte erfindungsgemäße Vorrichtung zur Herstellung von Faserverbundteilen;
- Fig. 8: eine perspektivische Ansicht von Faserschichten und erfindungsgemäß gespannten Stützstruktur-Fasern; und
- Fig. 9: einen Querschnitt eines erfindungsgemäß hergestellten Schiffsmastprofils.

Die Fig. 1a-1e zeigen bekannte Wickelkerne.

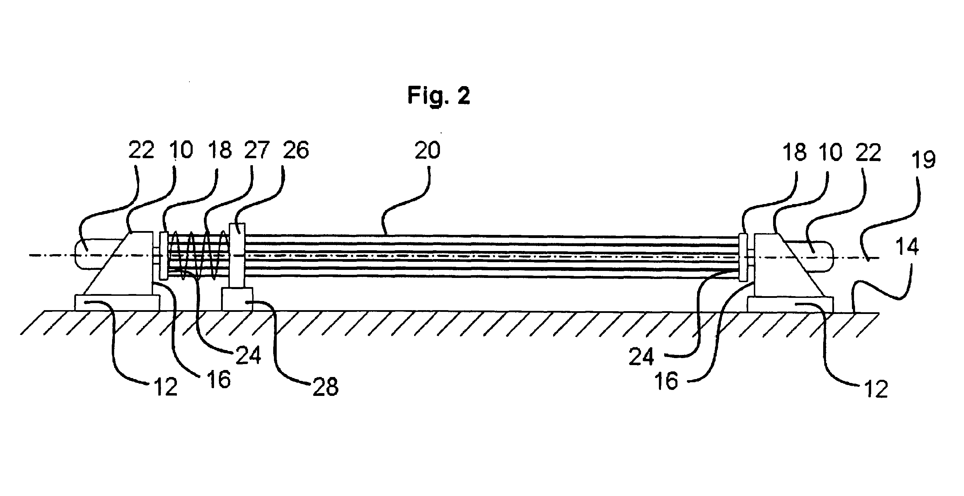

Fig. 2 zeigt ein erstes Ausführungsbeispiel einer erfindungsgemäßen Vorrichtung, die als Wickelvorrichtung ausgelegt ist. Diese weist zwei als Spannböcke 10 ausgebildete Spannvorrichtungen auf, die auf Supports 12 angeordnet sind, die ihrerseits fest oder bewegbar mit einer Grundfläche 14 oder einem Fundament verbunden sind. An den einander zugekehrten Stirnseiten 16 der Spannböcke 10 ist jeweils ein Drehkopf 18 angeordnet, der mit einem am Spannbock 10 befestigten Drehantrieb 22 koppelbar ist. Zwischen den Drehköpfen 18 sind einzelne Kohlefasern und/oder -bündel (Rovings) 20 gespannt und werden von den Drehköpfen 18 in ihrer gespannten Lage gehalten. Die gespannten Kohlefasern/Rovings 20 sind hier kreisförmig um eine Drehachse 19 angeordnet und in deren Richtung gespannt; sie bilden so eine Stützstruktur. Die Drehantriebe 22 der beiden Spannböcke 10 drehen die mit ihnen gekoppelten Drehköpfe 18 synchron mit einstellbarer Drehzahl.

Wenigstens einer der Spannböcke 10 und/oder die Drehköpfe 18 ist in allen drei Raumrichtungen verstellbar und im Prinzip in jedem Punkt des dreidimensionalen Raums festlegbar. Die Längsrichtung (entlang der Drehachse 19) der gespannten Kohlefasern 20 wird nachfolgend als Z-Richtung bezeichnet, die senkrechten Richtungen hierzu als X- und Y-Richtung.

Zwischen den Spannböcken 10 ist weiterhin Ablegevorrichtung 26 auf einem Ablegesockel 28 angeordnet, wobei der Ablegesockel 28 in Z-Richtung und die Ablegevorrichtung 26 in X- und Y-Richtung verfahrbar ist. Die Ablegevorrichtung 26 wickelt ein oder mehrere Kohlefasern bzw. Rovings 27 in einem beliebigen Winkel zwischen ca. 5° bis 90°, vorzugsweise 5° bis 10°zur Z-Richtung auf die den Wickelkern bildenden gespannten Kohlefasern 20. Dabei drehen sich die Drehköpfe 18 und damit die aus den Kohlefasern 20 gebildete Stützstruktur, während die Ablegevorrichtung 26 zwischen den Spannböcken 10 auf und ab wandert und solange Kohlefasern 27 auf dem gespannten Kohlefaserwickelkern 20 kreuzweise übereinander ablegt, bis die gewünschte Wanddicke des herzustellenden Faserverbundteils erreicht ist.

Danach erfolgt das Aushärten des so entstandenen Kohlefaserteils, z.B. eines Rohres oder eines Masts in Luft oder in einem Autoklaven. Nach dem Aushärten wird das so hergestellte Kohlefaserverbundteil von den Drehköpfen 18 abgenommen und kann weiter verarbeitet werden.

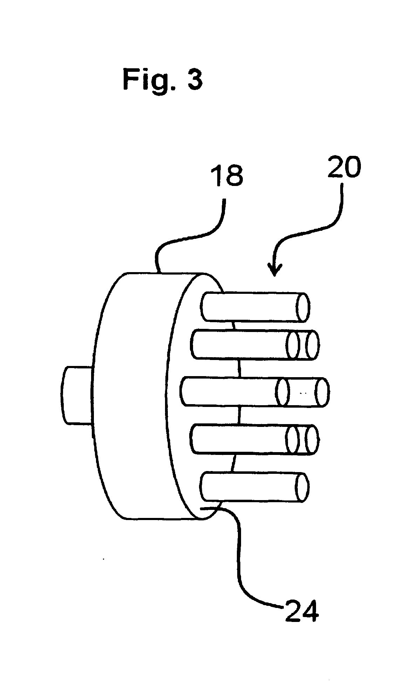

Fig. 3 veranschaulicht eine vergrößerte schematische Ansicht des Drehkopfs 18 mit den Endabschnitten der Rovings 20, die an der Stirnfläche 24 des Drehkopfes in einem vorbestimmten Muster angeordnet sind, z.B. kreisförmig, elliptisch, rechteckig oder dergleichen. Die Befestigung der Rovings erfolgt mit geeigneten (nicht weiter dargestellten) Klemmeinrichtungen.

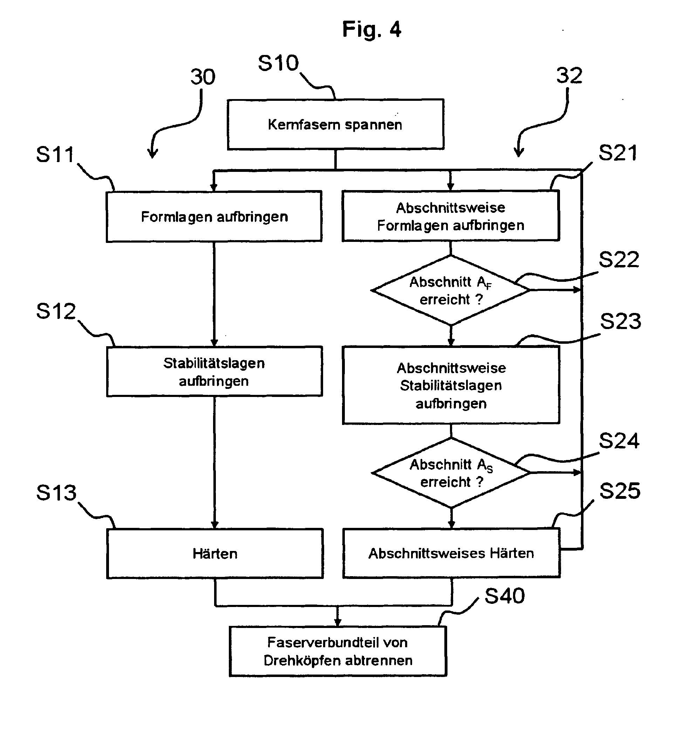

Fig. 4 zeigt verschiedene Möglichkeiten in einem Flussdiagramm zur Herstellung eines erfindungsgemäßen Faserverbundteils.

Bei einem ersten Herstellungsverfahren 30 wird in Schritt S10 eine Stützstruktur aus mehreren Kohlefasern aufgespannt. Darauf folgt je nach weiterem Verfahrensgang in Schritt S11 ein Aufbringen von Kohlefasern, die wenigstens eine erste geschlossene Formlage bilden und nach ihrem Aufbringen zu einer Form führen, die rein äußerlich wie ein bekannter Wickelkern aussieht und als Ausgangsform für weitere Wickellagen dient. In Schritt S12 folgt das Aufbringen von Kohlefasern, die wenigstens eine Stabilitätslage auf der Formlage bilden, wobei die Stabilitätslage im Wesentlichen als Lage zum Bilden von mechanischen Eigenschaften, wie z.B. Zugfestigkeit, Torsionsfestigkeit, Biegefestigkeit etc. dient. Anschließend folgt Schritt S13 zum Härten der auf den Kern aufgebrachten Lagen. Das so gefertigte Faserverbundteil wird dann in Schritt S40 von den Drehköpfen abgetrennt. Alternativ kann von Schritt S11 direkt zu Schritt S13 gegangen und die wenigstens eine Formlage auf dem Kern gehärtet werden, um dann mit Schritt S12 fortzufahren. Ferner können die Schritte S11 und S12 zu einem Schritt zusammengefasst oder vertauscht werden. Zusätzlich können weitere Schritte vor dem Schritt S13 zum Härten eingefügt werden, z.B. Schritte zum Lagenaufbringen für Anbauteile, etwa Salings für Schiffsmasten, Ösen, Verbindungsstücke und dergleichen.

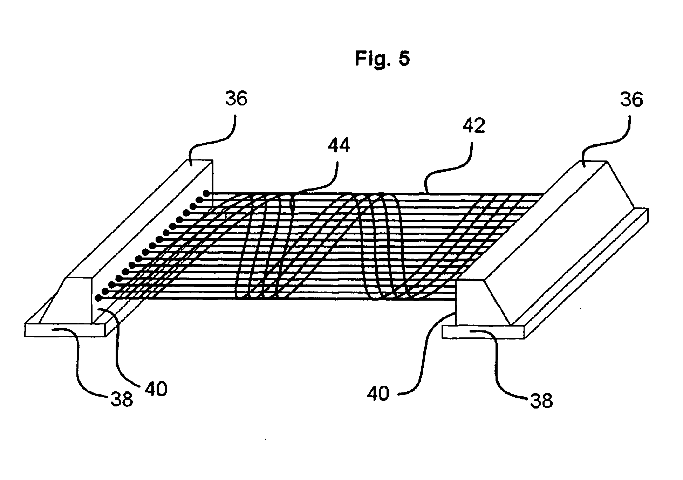

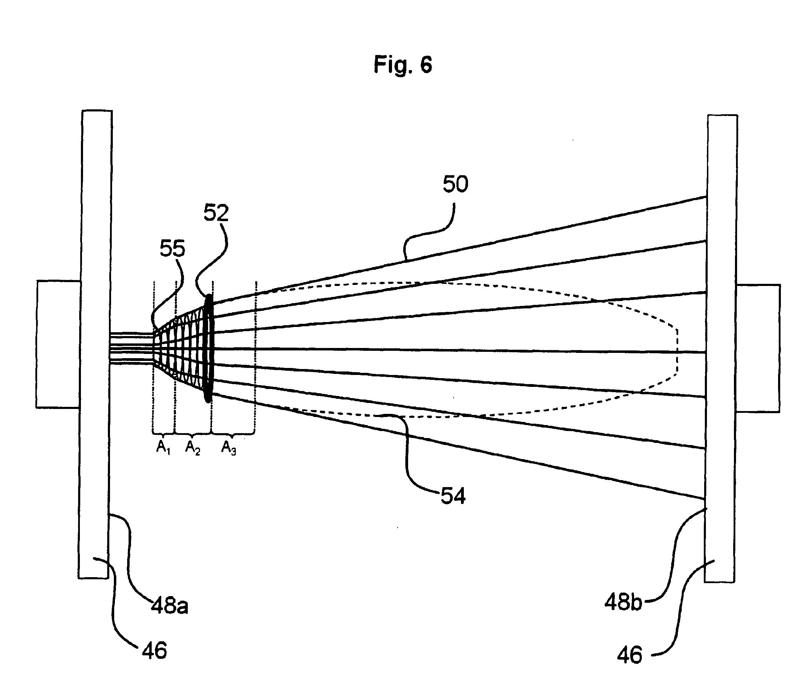

Fig. 4 zeigt auch weitere Verfahrensabläufe 32, die näher anhand der Figuren 5-8 beschrieben werden. Auch diese Verfahren beginnen wiederum mit Schritt S10 und auf den wahlweise Schritt S21 folgt, bei dem wenigstens eine Formlage abschnittsweise auf die Kern-Stützstruktur aufgebracht wird. In Schritt S22 wird geprüft, ob der Abschnitt A_{F} - siehe Figur 6 - erreicht bzw. aufgebracht wurde oder ob Schritt S21 für einen weiteren Abschnitt durchlaufen oder aber ob bereits Schritt S25 zum abschnittsweisen Härten - siehe wiederum Figur 6 - durchgeführt werden soll. Im Anschluss daran folgt Schritt S23 zum Aufbringen von wenigstens einer Stabilitätslage auf den Kern. In Schritt S24 wird überprüft, ob der Abschnitt Aₛ (Fig. 6) erreicht wurde, oder ob Schritt S21 für weitere Abschnitte durchlaufen werden soll bzw. ob bereits Schritt S25 zum abschnittsweisen Härten durchgeführt werden soll. Nach Abschluss von Schritt S23 kann Schritt S25 zum abschnittsweisen Härten folgen. Das so gefertigte Faserverbundteil wird dann in Schritt S40 von den Drehköpfen abgenommen.

Darüber hinaus sind Schritte aus den Verfahrens-Flüssen 30 und 32 vertauschbar, aber auch kombinierbar.

Fig. 5 zeigt eine perspektivische Ansicht eines zweiten Ausführungsbeispiels einer erfindungsgemäßen Vorrichtung zur Herstellung eines plattenförmigen Faserverbundteils. Dabei bilden zwei gleichartige Spannböcke 36 auf Supports 38 die Spanneinrichtung. Die Supports können auf einer Grundfläche (nicht gezeigt) in wenigsten einer Raumrichtung bewegbar angeordnet sein. An den Stirnseiten 40 der Spannböcke 36 sind Fasern oder Rovings 42 so angeordnet, dass sie eine Ebene zwischen den Stirnseiten 40 aufspannen. Eine Ablegevorrichtung (nicht gezeigt) bringt Kohlefasern, Rovings und/oder Prepregs 44 auf die Fasern 42 auf.

Grundsätzlich können die einzelnen Fasern 42 auch frei hängend oder mit unterschiedlichen vorbestimmten Zugkräften gespannt sein, z.B. nach Art einer Hängematte, die eine Stützstruktur für eine Wanne bildet.

Fig. 6 zeigt eine Seitenansicht eines dritten Ausführungsbeispiels einer erfindungsgemäßen Vorrichtung zur Herstellung von Faserverbundteilen. Dabei sind zwei Drehköpfe 46 mit einander zugewandten Stirnflächen 48a und 48b im Abstand voneinander angeordnet. An den Stirnflächen sind Fasern, z.B. Rovings 50 gespannt, die von einer Umlenkeinrichtung 52 in einem bestimmten Winkel umgelenkt werden. Die gestrichelte Linie 54 zeigt ein herzustellendes Faserverbundteil, z.B. ein Flugzeugrumpf. Die Rovings 50 werden dabei von der Umlenkeinrichtung 52 so umgelenkt, dass sie das herzustellende Faserverbundteil abschnittsweise annähern, also z.B. als Tangenten oder Sekanten. Damit das Faserverbundteil entsprechend dem gewünschten Profil 54 hergestellt werden kann, ist die Umlenkeinrichtung 52 in Z-Richtung bewegbar ausgelegt und hat - je nach gewünschtem Profil des herzustellenden Formteils - einen veränderbaren oder konstanten Durchmesser.

Die Umlenkvorrichtung 52 kann mit Umlenk-Rollen bestückt sein. Sie kann auch als verstellbare Schlaufe, z.B. aus Kohlefasern oder dergleichen ausgestaltet sein.

Zur Herstellung eines solchen Faserverbundteils werden zunächst Rovings 50 zentral ausgehend von einer Stirnseite 48a kegelartig auseinanderlaufend zur gegenüberliegenden Stirnseite 48b gespannt. Die Umlenkeinrichtung 52 befindet sich dabei zunächst am linken Rand des Abschnitts A₁, der im Folgenden z.B. durch eine Ablegevorrichtung (nicht gezeigt) mit Fasern 55 bis zum linken Rand von Abschnitt A₂ bewickelt wird. Anschließend wird Abschnitt A₁ gehärtet und stabilisiert. Danach wird die Umlenkeinrichtung 52 im Durchmesser verändert und zum linken Rand von Abschnitt A₂ verschoben oder stattdessen eine weitere Umlenkform 52 mit größerem Durchmesser verwendet. Der so definierte Abschnitt A₂ wird wieder mit Fasern 55 bewickelt und gehärtet. Danach wird Abschnitt A₃ entsprechend A₁ und A₂ vorbereitet und bearbeitet. Die weitere Bearbeitung wird in dem nicht bewickelten Bereich vom (im Bild rechten) Rand von Abschnitt A₃ in Richtung des Drehkopfes 48b abschnittsweise fortgesetzt, bis das Faserverbundteil mit dem gewünschten Profil fertiggestellt ist. Das Verfahren zur Herstellung eines solchen Faserverbundteils kann z.B. gemäß der Verfahrensvariante 32 in Fig. 4 durchgeführt werden. Mit der soeben beschriebenen Vorrichtung und dem Verfahrensablauf 32 können auch Flugzeugflügel, Tunnel-Teilsegmente, Tragevorrichtungen, etwa einen T- oder Doppel-T-Träger, Schiffsmasten und dergleichen hergestellt werden. Schneidet man solche Körper längs einer die Z-Richtung enthaltenden Ebene, erhält man Wannen, Schiffsrümpfe und dergleichen.

Statt der oder zusätzlich zur Umlenkeinrichtung 52 können die Enden des Rovings 50 in der Stirnfläche 48b des distalen Drehkopfes 46 beweglich geführt sein, derart, dass sich die gespannten Rovings 50 allein durch schrittweises Verändern der Position der Rovingenden innerhalb der Stirnfläche 48b, und zwar jeweils nach Aushärten des zuvor fertiggestellten Abschnittes A₁, A₂, A₃ ... - abschnittsweise tangential an das gewünschte Profil 54 anlegen.

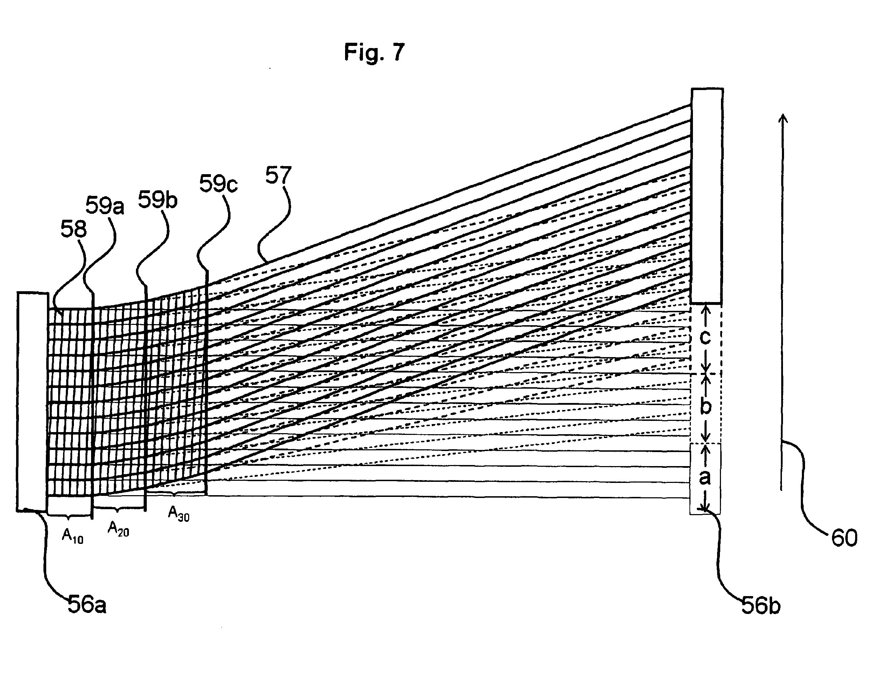

Fig. 7 veranschaulicht ein viertes Ausführungsbeispiel einer erfindungsgemäßen Vorrichtung zur Herstellung von Faserverbundteilen. Dabei spannen wiederum zwei Spannböcke 56a und 56b, deren zueinander parallel, einander zugekehrt und in einem bestimmten Abstand zueinander angeordnet sind, zwischen Fasern 57 zu einer Stützstruktur auf - ähnlich wie Fig. 5. Anders als in Fig. 5 sind die Fasern 57 hier in einer kreisförmigen Anordnung an den Spannböcken 56a und 56b befestigt und definieren anfangs einen geraden Zylinder. Auf die gespannten Fasern 57 sind abschnittsweise weitere Fasern 58 abgelegt, wobei feststehende Umlenkvorrichtungen 59a bis 59c, die zwischen den Spannböcken 56 angeordnet sind und die Abschnitte A₁₀-A₃₀ definieren, die gespannten Fasern 58 abschnittsweise in Richtung des Pfeiles 60 umlenken. Im dargestellten Ausführungsbeispiel verläuft der Pfeil 60 in einer zur Z-Richtung senkrechten Richtung. Er kann aber auch in anderen, beliebigen Richtungen zur Z-Richtung verlaufen und dabei sogar seine Richtung ändern, auch so, dass seine Pfeilspitze eine 2- oder 3-dimensional gekrümmte Bahnkurve durchläuft. Wenigsten einer der beiden Spannböcke 56 ist in/gegen die Richtung von Pfeil 60 bewegbar.

Ein Verfahren zur Herstellung einer Vorrichtung von Faserverbundteilen nach einer in Fig. 7 gezeigten Ausführungsform umfasst im Wesentlichen in dieser Reihenfolge: Aufspannen von Fasern 57 zwischen den Spannböcken 56a und 56b; Ablegen weiterer Fasern 58 in Abschnitt A₁₀; abschnittsweises Härten von Abschnitt A₁₀; Anbringen einer feststehenden Umlenkvorrichtung 59a, wobei diese auch vor dem Ablegen der anderen Fasern 58 oder dem Härten angebracht werden kann; Verschieben des Spannbocks 56b in Richtung von Pfeil 60 um den Betrag a bzw. Spannbock 56a in die Gegenrichtung; Ablegen weiterer Fasern 58 in Abschnitt A₂₀; abschnittsweises Härten von Abschnitt A₂₀; Anbringen der feststehenden Umlenkvorrichtung 59b, an die gespannten Fasern 57, um diese ein Stück in Richtung von Pfeil 60 umzulenken; Verschieben des Spannbocks 56b ein weiteres Stück b in Richtung von Pfeil 60 bzw. Spannbock 56a in Gegenrichtung; Ablegen von anderen Fasern 58 in Abschnitt A₃₀ und so weiter bis das Faserverbundteil fertiggestellt ist. Die Strecken a, b, c etc. können dabei unterschiedlich groß sein. Die Reihenfolge der Arbeitsgänge ist änderbar oder mit oben genannten Arbeitsgängen der zuvor beschriebenen Ausführungsbeispiele kombinierbar. So kann die in Fig. 6 gezeigte Vorrichtung und das in Fig. 4 gezeigte Verfahren mit dem in Fig. 7 erläuterten Verfahren kombiniert werden, um beispielsweise einen sich verjüngenden und gebogenen Schiffsmast, T-Träger und dergleichen zu bilden.

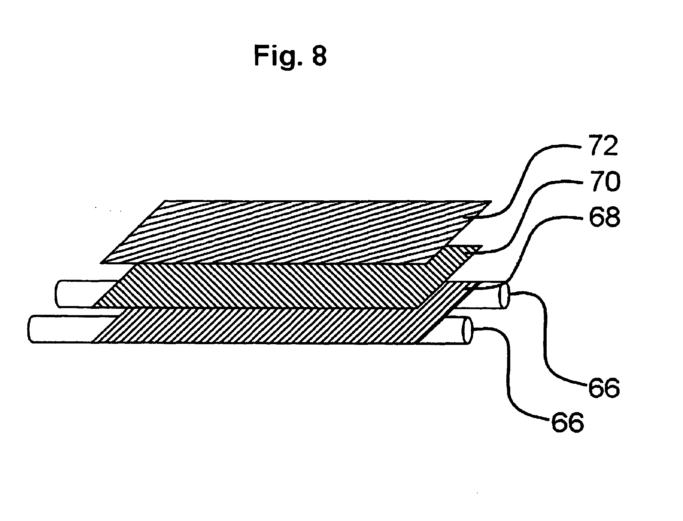

Fig. 8 zeigt einen Ausschnitt aus einem Faserverbundteil in perspektivischer Explosions-Darstellung. Auf den gespannten Fasern 66, die einen Teil der Stützstruktur bilden, ist wenigsten eine Schicht 68 Kohlefasern bzw. Rovings in Umlaufrichtung aufgelegt, z.B. um auf den gespannten Fasern 66 Formlagen zu bilden. Schicht 68 umfasst wenigstens eine Lage aufgelegter Kohlefasern. Schicht 70 umfasst wenigstens eine Lage aufgelegter Kohlefasern in einem beliebigen Winkel, beispielsweise von +5 bis +10° zur Z-Richtung. Schicht 72 umfasst wenigstens eine Lage aufgelegter Kohlefasern in einem beliebigen Winkel, bespielsweise von -5 bis -10° zur Z-Richtung und geringerem Abstand zu einander als in Schicht 68. Insbesondere liegt eine Schicht der auf die gespannten Fasern 66 aufgebrachten Fasern nahezu in Z-Richtung, z.B. um Zug-Druck-Belastung auf das Faserverbundteil aufzunehmen, während die Fasern einer anderen Schicht senkrecht zur Z-Richtung verlaufen, um Querkräfte, Torsionskräfte, Biegemomente und dergleichen, auf das Faserverbundteil aufzunehmen.

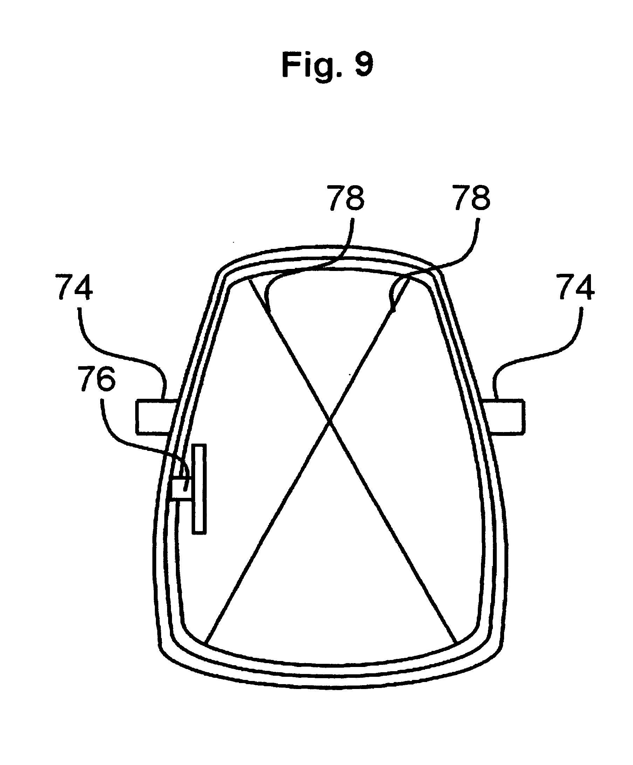

Fig. 9 zeigt einen Querschnitt durch einen etwa trapezförmigen Schiffsmast aus einem Faserverbund. Der Schiffsmast kann ein vom Mastfuss bis zum Masttop spitz zulaufender Segelmast sein. An bestimmten Stellen entlang des Mastes können beim erfindungsgemäßen Verfahren Verbindungselemente, z.B. außen am Mast Salingfüsse 74, innen Zapfen 76 für eine Umlenkrolle, auch Führungsstrukturen, z. B. Führungsschienen, eingeformt werden. Innerhalb des Masts können Fasern 78 quer über das Profil (in Z- und/oder X- und/oder Y-Richtung), ähnlich einer Fachwerkkonstruktion, gespannt werden, z.B. um dem Mast eine höhere Steifigkeit zu verleihen.

Anzumerken ist noch, dass die Stützstrukturen statt aus auf Zugspannung belastbaren Längsstrukturen, insbesondere also aus hochfesten Fasern, wie Kohlefasern, grundsätzlich auch aus auf Druck belastbaren Längsstrukturen, etwa elastischen Stäben, Stangen, Gerten, Latten, Rohren oder dergleichen aufgebaut werden können. Würde beispielsweise die in Fig. 2 schematisch veranschaulichte Stützstruktur aus Stäben aufgebaut sein und diese auf Druck in Richtung der Z-Achse beansprucht werden, ergäbe sich eine tonnenförmig nach außen ausgebauchte Stützstruktur oder alternativ eine hyperboloidartig nach innen ausgebauchte Stützstruktur.

Schließlich kann die Zug- oder die Druckspannung für jede einzelne oder gruppenweise für mehrere Längsstrukturen zur Erzeugung der Stützstruktur individuell eingestellt und dadurch die Formenvielfalt der möglichen Stützstrukturen weiter erhöht werden; um so mehr bei Stützstrukturen die aus Längsstrukturen aufgebaut aufgebaut sind, von denen einige unter Zugspannung, andere hingegen unter Druckspannung stehen.

## Patentansprüche

1. Verfahren zur Herstellung eines Faserverbundteils, bei welchem eine Stützstruktur aus gespannten Fasern (20; 42; 50; 56; 57; 66; 78) ausgebildet und diese dann mit weiteren Fasern (27; 44; 55; 58; 68; 70; 72) verbunden wird, wobei die weiteren Fasern schrittweise auf Abschnitte der Stützstruktur aufgebracht werden und der jeweils zuletzt mit den weiteren Fasern belegte Abschnitt fixiert oder ausgehärtet wird
**dadurch gekennzeichnet, dass**
anschließend die Spannrichtung der gespannten Fasern in den noch nicht belegten Abschnitten der Stützstruktur und hierdurch die Form der Stützstruktur geändert wird.

2. Verfahren nach Anspruch 1, bei welchem die gespannten Fasern (20; 42; 50; 56; 57; 66; 78) Kohlefasern aufweisen.

3. Verfahren nach Anspruch 1 oder 2, bei welchem die weiteren Fasern Kohlefasern (27; 44; 55; 58; 68; 70; 72) aufweisen.

4. Verfahren nach einem der vorhergehenden Ansprüche, bei welchem die weiteren Fasern mittels einer Ablegeeinrichtung (26) auf den gespannten Fasern (20; 42; 50; 56; 57; 66; 78) abgelegt werden.

5. Verfahren nach einem der vorhergehenden Ansprüche, bei welchem die Spannrichtung einzelner oder aller gespannter Fasern im Verlauf des Herstellungsverfahrens verändert wird.

6. Verfahren nach einem der vorhergehenden Ansprüche, bei welchem mechanische Teile, insbesondere spezielle Formteile, wie Gelenke (für Prothesen), oder Strukturteile, wie Salinge oder Schienen, in das Faserverbundteil während dessen Herstellungsprozesses eingebracht werden.

7. Vorrichtung zur Herstellung eines Faserverbundteils, insbesondere nach dem Verfahren gemäß vorstehender Ansprüche, mit wenigstens einer eine Stützstruktur aus gespannten Fasern haltenden Spanneinrichtung (10, 36, 56a, 56b) zum Spannen der Fasern wobei die Vorrichtung derart ausgelegt ist, dass weitere Fasern schrittweise auf Abschnitte der Stützstrukturen aufbringbar sind und dass der jeweils zuletzt mit den weiteren Fasern belegte Abschnitt fixierbar **oder** aushärtbar ist **dadurch gekennzeichnet, dass** durch die Spanneinrichtung (10, 36, 56a, 56b) die Spannrichtung der gespannten Fasern in den noch nicht belegten Abschnitten der Stützstruktur und hierdurch die Form der Stützstruktur veränderbar ist.

8. Vorrichtung nach Anspruch 7 mit wenigstens einem an der Spanneinrichtung angeordneten die gespannten Fasern aufnehmenden ersten Kopf (18, 46).

9. Vorrichtung nach Anspruch 8, bei welcher der erste Kopf (18, 46) um eine Spannachse drehbar an der Spanneinrichtung (10) gelagert und vorzugsweise mit einem ersten Drehantrieb (22) zum Drehen des ersten Kopfs (18, 46) koppelbar ist.

10. Vorrichtung nach einem der Ansprüche 7 bis 9 mit einer zweiten, Spanneinrichtung (10, 36, 56a, 56b), die einen zweiten drehbar gelagerten Kopf (18, 46) aufweist, sodass die Stützstruktur insgesamt zwischen beiden Spanneinrichtungen drehbar gehaltert ist.

11. Vorrichtung nach Anspruch 10, bei welcher der zweite Kopf (18, 46) mit einem zweiten Drehantrieb (22) koppelbar ist und wenigstens einer der Drehantriebe (22) derart ausgelegt oder ansteuerbar ist, dass die beiden Köpfe (18) synchron drehbar sind.

12. Vorrichtung nach einem der Ansprüche 7 bis 11, bei welcher wenigstens eine Spanneinrichtung (10,36, 56a, 56b) so ausgebildet ist, das die Spannrichtung einzelner oder aller gespannter Fasern veränderbar ist.

13. Vorrichtung nach einem der Ansprüche 7 bis 12 mit einer in Längsrichtung der gespannten Fasern (20; 42; 50; 56; 57; 66; 78) bewegbaren Ablegeeinrichtung (26) zum Ablegen der weiteren Fasern (27, 44, 55, 58) auf der Stützstruktur.

14. Vorrichtung nach Anspruch 13, bei welcher die Ablegeeinrichtung (26) in wenigstens einer Raumrichtung senkrecht zur Längsrichtung der gespannten Fasern (20; 42; 50; 56; 57; 66; 78) bewegbar angeordnet ist.

15. Verwendung des Verfahrens nach einem der Ansprüche 1 bis 6 und/oder der Vorrichtung nach einem der Ansprüche 7 bis 14 zur Herstellung von Masten, Schiffsrümpfen, Flugzeugrümpfen, Flugzeugflügeln, sonstigen 3-D-Körpern, Platten und Prothesen aus Faserverbundstoff.

16. Verwendung nach Anspruch 15 zur Herstellung von Lagen die teilweise offen bleiben, wie Netzstrukturen, Fensteröffnungen oder Aussparungen sowie Ansatzstrukturen.

## Claims

1. A method for manufacturing a composite fibre part, wherein a supporting structure made of clamped fibres (20; 42; 50; 56; 57; 66; 78) is formed, and this is then connected to further fibres (27; 44; 55; 58; 68; 70; 72), wherein the further fibres are applied stepwise to portions of the supporting structure and, in each case, the portion last covered with the further fibres is fixed or hardened,
**characterised in that**
the clamping direction of the clamped fibres is varied in the not yet covered portions of the supporting structure, and accordingly, the form of the supporting structure is varied.

2. The method according to claim 1, wherein the clamped fibres (20; 42; 50; 56; 57; 66; 78) comprise carbon fibres.

3. The method according to claim 1 or 2, wherein the further fibres comprise carbon fibres (27; 44; 55; 58; 68; 70; 72).

4. The method according to any one of the preceding claims, wherein the further fibres are deposited onto the clamped fibres (20; 42; 50; 56; 57; 66; 78) by means of a laying device (26).

5. The method according to any one of the preceding claims, wherein the clamping direction of individual or of all clamped fibres is varied during the course of the manufacturing method.

6. The method according to any one of the preceding claims, wherein mechanical parts, in particular, special formed parts, such as joints (for prostheses), or structural parts, such as spreaders or rails, are introduced into the composite fibre part during its manufacturing process.

7. A device for manufacturing a composite fibre part, especially according to the method specified in the preceding claims, with at least one clamping device (10, 36, 56a, 56b) for clamping the fibres, holding a supporting structure made of clamped fibres, wherein the device is embodied in such a manner that further fibres can be applied stepwise to portions of the supporting structures and that the portion last covered with the further fibres in each case can be fixed or hardened,
**characterised in that**
the clamping direction of the clamped fibres in the not yet covered portions of the supporting structure and accordingly the shape of the supporting structure can be varied through the clamping device (10, 36, 56a, 56b).

8. The device according to claim 7 with at least one head (18, 46) arranged on the clamping device receiving the clamped fibres.

9. The device according to claim 8, wherein the first head (18, 46) is mounted on the clamping device (10) in a rotatable manner about a clamping axis and can preferably be coupled with a first rotary drive (22) for the rotation of the first head (18, 46).

10. The device according to any one of claims 7 to 9 with a second clamping device (10, 36, 56a, 56b), which comprises a second head (18, 46) mounted in a rotatable manner, so that the supporting structure as a whole is held in a rotatable manner between the two clamping devices.

11. The device according to claim 10, wherein the second head (18, 46) can be coupled with a second rotary drive (22), and at least one of the rotary drives (22) is embodied or can be controlled in such a manner that the two heads (18) can be rotated synchronously.

12. The device according to any one of claims 7 to 11, wherein at least one clamping device (10, 36, 56a, 56b) is embodied in such a manner that the clamping direction of individual or of all clamped fibres can be varied.

13. The device according to any one of claims 7 to 12 with a laying device (26) displaceable in the longitudinal direction of the clamped fibres (20; 42; 50; 56; 57; 66; 78) for depositing the further fibres (27, 44, 55, 58) on the supporting structure.

14. The device according to claim 13, wherein the laying device (26) is arranged in a displaceable manner in at least one spatial direction perpendicular to the longitudinal direction of the clamped fibres (20; 42; 50; 56; 57; 66; 78).

15. A use of the method according to any one of claims 1 to 6 and/or of the device according to any one of claims 7 to 14 for the manufacture of masts, vessel hulls, aircraft fuselages, aircraft wings, other 3-D bodies, panels and prostheses made of composite fibre material.

16. The use according to claim 15 for manufacturing layers which remain partially open, such as mesh structures, window openings or recesses and shouldered structures.

## Revendications

1. Procédé de fabrication d'un élément composite renforcé par des fibres, où une structure de support composée de fibres tendues (20 ; 42 ; 50 ; 56 ; 57 ; 66 ; 78) est réalisée et ensuite assemblée à d'autres fibres (27 ; 44 ; 55 ; 58 ; 68 ; 70 ; 72), lesdites autres fibres étant graduellement appliquées sur des parties de la structure de support, et la partie dernièrement revêtue par les autres fibres étant fixée ou durcie, **caractérisé en ce que** le sens de tension des fibres tendues dans les parties non encore revêtues de la structure de support est ensuite modifié, et avec lui la forme de la structure de support.

2. Procédé selon la revendication 1, où les fibres tendues (20 ; 42 ; 50 ; 56 ; 57 ; 66 ; 78) comprennent des fibres de carbone.

3. Procédé selon la revendication 1 ou la revendication 2, où les autres fibres comprennent des fibres de carbone (27 ; 44 ; 55 ; 58 ; 68 ; 70 ; 72).

4. Procédé selon l'une des revendications précédentes, où les autres fibres sont déposées sur les fibres tendues (20 ; 42 ; 50 ; 56 ; 57 ; 66 ; 78) au moyen d'un dispositif d'application (26).

5. Procédé selon l'une des revendications précédentes, où le sens de tension de certaines ou de toutes les fibres tendues est modifié en cours de processus de fabrication.

6. Procédé selon l'une des revendications précédentes, où des éléments mécaniques, en particulier des éléments moulés spéciaux tels que des articulations (pour des prothèses), ou des éléments structurels tels que des barres de flèche ou des rails sont intégrés à l'élément composite renforcé par des fibres pendant le processus de fabrication de celui-ci.

7. Dispositif pour la fabrication d'un élément composite renforcé par des fibres, en particulier suivant le procédé selon les revendications précédentes, comportant au moins un dispositif de tension (10, 36, 56a, 56b) pour la tension des fibres, le dispositif de témoi maintenant une structure de support en fibres tendues, ledit dispositif étant conçu de telle manière que d'autres fibres sont graduellement applicables sur des parties de la structure de support, et que la partie dernièrement revêtue par les autres fibres est fixable ou durcissable, **caractérisé en ce que** le sens de tension des fibres tendues dans les parties non encore revêtues de la structure de support est modifiable par le dispositif de tension (10, 36, 56a, 56b), et avec lui la forme de la structure de support.

8. Dispositif selon la revendication 7, comportant au moins une première tête (18, 46) recevant les fibres tendues et prévue sur le dispositif de tension.

9. Dispositif selon la revendication 8, où la première tête (18, 46) est montée sur le dispositif de tension (10) de manière à être rotative autour d'un axe de tension, et est de préférence accouplable à un premier entraînement rotatif (22) pour la rotation de la première tête (18, 46).

10. Dispositif selon l'une des revendications 7 à 9, comportant un deuxième dispositif de tension (10, 36, 56a, 56b), lequel est pourvu d'une deuxième tête (18, 46) montée de manière à être rotative, si bien que la structure de support est dans son ensemble montée de manière à être rotative entre les deux dispositifs de tension.

11. Dispositif selon la revendication 10, où la deuxième tête (18, 46) est accouplable à un deuxième entraînement rotatif (22), et où au moins un des entraînements rotatifs (22) et conçu ou commandable de manière à entraîner les deux têtes (18) en rotation synchrone.

12. Dispositif selon l'une des revendications 7 à 11, où au moins un dispositif de tension (10,36, 56a, 56b) est réalisé de telle manière que le sens de tension de certaines ou de toutes les fibres tendues est modifiable.

13. Dispositif selon l'une des revendications 7 à 12, comportant un dispositif d'application (26) mobile dans le sens de la longueur des fibres tendues (20 ; 42 ; 50 ; 56 ; 57 ; 66 ; 78) pour déposer les autres fibres (27, 44, 55, 58) sur la structure de support.

14. Dispositif selon la revendication 13, où le dispositif d'application (26) est prévu de manière à être mobile dans au moins une direction spatiale perpendiculairement au sens de la longueur des fibres tendues (20 ; 42 ; 50 ; 56 ; 57 ; 66 ; 78).

15. Utilisation du procédé selon l'une des revendications 1 à 6 et/ou du dispositif selon l'une des revendications 7 à 14 pour la fabrication de mâts, de coques de bateaux, de fuselages d'avion, d'ailes d'avion, d'autres corps tridimensionnels, de plaques et de prothèses en matériau composite renforcé par des fibres.

16. Utilisation selon la revendication 15 pour la fabrication de couches qui restent partiellement ouvertes, telles que structures en réseau, baies, évidements ou structures en saillie.
